# EUROPEAN PATENT APPLICATION

(11) **EP 4 574 354 A1**
(43) Date of publication of application: **25.06.2025**
(21) Application number: 23220090.7
(22) Date of filing: 22.12.2023
(51) Int. Cl.: B25J 19/00, B25J 9/08, B25J 5/00, B25J 11/00

(54) **MOBILE ROBOT WITH CONFIGURABLE ADAPTER**

(71) Applicant: Baubot GmbH, 1100 Wien (AT)
(72) Inventor: MIETH, Gabriel, 1100 Wien (AT)
(74) Representative: Fischerwerke

(57) **Abstract**

A Mobile robot (1) comprising:
- a robot base (2);
- a multi-axis robot arm (4) arranged on the robot base (2);
- a central module (5) with a controller;
- a robot arm coupler (6) connected to the multi-axis robot arm (4);
- a tool (7) releasably connected to the robot arm coupler (6) ;
- a robot base coupler (8) connected to the robot base (2);
- a tool support unit (10) with a tool support element (16) and a tool support adapter (9);
- wherein the robot base coupler (8) comprises a plurality of first electrical coupling elements (12, 12A, 12B, 12C, 12D, 12E, 12F), and a plurality of second electrical coupling elements (13, 13A, 13B, 13C, 13D, 13E, 13F);
- a plurality of first electrical lines (14) connecting the first electrical coupling elements (12, 12A, 12B, 12C, 12D, 12E, 12F) of the robot base coupler (8) to the tool (7);
- a plurality of second electrical lines (15) connecting the second electrical coupling elements (13, 13A, 13B, 13C, 13D, 13E, 13F) of the robot base coupler (8) to the central module (5) ;
wherein the tool support adapter (9) is configured to electrically connect at least one of the first electrical coupling elements (12, 12A, 12B, 12C, 12D, 12E, 12F) to one of the second electrical coupling elements (13, 13A, 13B, 13C, 13D, 13E, 13F), such that at least one of the first electrical lines (14) is electrically connected to at least one of the second electrical lines (15) and the tool support element (16) is bypassed by the at least one first electrical line (14) and the at least one second electrical line (15).

## Description

The disclosure concerns a mobile robot, preferably a mobile construction robot, for a construction site comprising:
- a robot base with a propulsion system for moving the robot base on a surface;
- a multi-axis robot arm arranged on the robot base;
- a central module with a controller, wherein the controller is configured to control at least the propulsion system and the multi-axis robot arm;
- a robot arm coupler connected to the multi-axis robot arm;
- a tool releasably connected to the robot arm coupler;
- a robot base coupler connected to the robot base;
- a tool support unit with a tool support element, for example an inverter or a variable-frequency drive, and a tool support adapter, wherein the tool support adapter of the tool support unit is releasably connected to the robot base coupler; wherein the robot base coupler comprises a plurality of first electrical coupling elements, preferably first pins, and a plurality of second electrical coupling elements, preferably second pins.

Mobile robots are used to automate especially repetitive and physically demanding tasks, for example at construction sites. For example, a mobile construction robot may drill holes at predefined positions or the installation of anchors or other fixings. Such mobile construction robots are configured to autonomously or automatically move around the construction site, locate the predefined positions at which a specific task is to be performed, and consequently perform the respective task. By means of such a robot, manpower can be deployed more efficiently and the construction can be sped up drastically.

Typically, such mobile robots comprise a robot base, a propulsion system for moving the robot, as well as a (multi-axis) robot arm with an end effector. The robot arm should comprise multiple axis so that the robot can move the end effector in various positions and orientations with respect to the robot base. The kinematic chain of the robot arm typically comprises a rocker arm, which is pivotably connected to the base, and a boom arm, which is pivotably connected to the rocker arm. Once the construction robot is in the vicinity of a action position, where a task is to be completed, the robot moves the robot arm so that by means of the end effector the respective task can be done.

Such mobile robots should ideally be adaptable to perform a variety of tasks. Such a versatility is crucial with respect to economic efficiency and productivity. For example, the robot base with the robot arm may serve as a platform for a broad variety of tools, such as drills or grippers, for a variety of applications. Tools may have different specifications with respect to power supply and control parameters, for example. As the tools are mounted at a distal end of the robot arm, the weight of the tool should be low in order to reduce the mechanical stress on the robot arm.

In order to achieve high versatility, such mobile robots can be equipped with any number of modules, which enable different applications. In a simple example, such a module may comprise a storage for anchors, from which said anchors may be mounted by means of the robot arm and the tool. It is however crucial, that the robot base can be connected to different tools and/or modules.

For example, US 2019 248 007 A1 shows an autonomous multitasking modular robotic system. The robot comprises a universal connection interface for modular attachments. A main robot upon being assigned a set of tasks, navigates to a plurality of modular attachments, attaches the modular attachments to the main
robot using the universal connection interface, and performs the set of tasks using the plurality of modular attachments. A first modular attachment is used to perform a first set of tasks, wherein a second modular attachment is used to perform a second set of tasks.

A disadvantage of the state of the art is that the interconnection of various modules or tools is rather complex since a central hub is required to coordinate the modules. The central hub therefore needs to be configured to coordinate different modules and control them properly. Any interaction between two modules has to be controlled by the central hub.

It is therefore an object of the invention to alleviate or eliminate at least some of the disadvantages of the prior art. In particular, it is an object of the invention to provide a mobile robot with an improved adaptable interconnectivity between a central hub of the mobile robot and exchangeable modules.

This object is solved by a mobile robot a mobile robot of the above-mentioned type, comprising:
- a plurality of first electrical lines, preferably first power lines and/or first data lines, connecting the first electrical coupling elements of the robot base coupler to the tool;
- a plurality of second electrical lines, preferably second power lines and/or second data lines, connecting the second electrical coupling elements of the robot base coupler to the central module;
- wherein the tool support adapter is configured to electrically connect at least one of the first electrical coupling elements to one of the second electrical coupling elements, such that at least one of the first electrical lines is electrically connected to at least one of the second electrical lines and the tool support element is bypassed by the at least one first electrical line and the at least one second electrical line.

The mobile robot may be used, for example, for drilling holes at a construction site for a building structure, which, for example, may be a building, a tunnel, a road, a bridge, a car park, a hospital, or any other infrastructure project where many, for example more than 1000, drilling holes are required. The mobile robot has a robot base, which may have a chassis for the propulsion system and a robot base body on top of the chassis. The robot base may be generally box-shaped. The robot base may, for example, house electronics and pneumatic and/or hydraulic compressors. The robot base may have a top side, a lower side, a first lateral side, a second lateral side, a first end side and a second end side.

The mobile robot comprises a propulsion system, which may be arranged on the lower side of the robot base, such that at least a part of the propulsion system is in contact with a surface, such as a ground of a construction site, in order to move robot base or, preferably, the entire robot. The propulsion system may for example comprise a motor, wheels and/or a continuous track. The top side of the robot base is opposite of the lower side of the robot base. The propulsion system may have a main axis of propulsion. The first lateral side and the second lateral side may extend essentially upwards and parallel to the main axis of propulsion, whereas the first end side and the second end side may be essentially orthogonal to the main axis of propulsion (i.e. the direction of movement going straight forward or backward).

The mobile robot further comprises a multi-axis robot arm, which may be arranged on the top side of the robot base, for example. The multi-axis robot-arm may for example comprise six axes, in order to provide sufficient degrees of freedom for the robot arm to be able to reach various positions. The robot arm is arranged on the robot base. An exemplary multi-axis robot arm with a rocker arm and a boom arm is shown in US 9 950 423 B2.

The mobile robot furthermore comprises a central module with a controller, wherein the controller is configured to control at least the propulsion system and the multi-axis robot arm. The central module may be housed inside the robot base. The central module may comprise further elements, such as a main power supply or a communication element for communicating with a user, for example.

The mobile robot furthermore comprises a robot arm coupler connected to the multi-axis robot arm, in particular to a distal end of the multi-axis robot arm. The robot arm coupler may be configured to be connected to one of a variety of tools. The tool may comprise or consist of an end-effector of the mobile robot, such as a gripper or a drill, for example. The tool is releasably connected to the robot arm coupler, such that the tool can be exchanged. The robot arm coupler may comprise a chuck, or quick changer for example.

Furthermore, the mobile robot comprises a robot base coupler connected to the robot base, which is releasably connected to a tool support adapter of a tool support unit. The tool support unit comprises a tool support element. The tool support unit, in particular the tool support element, may be configured to provide support for the tool and enable at least certain functionalities of the tool. For example, the central module of the robot may be configured to provide DC current, wherein the tool may rely on an AC current. In this example, the tool support element may comprise an inverter, which may receive DC current from the central module, change the DC current to AC current and provides the tool with the AC current.

The robot base coupler comprises a plurality of first electrical coupling elements, preferably first pins, and a plurality of second electrical coupling elements, preferably second pins. The robot base coupler may be a plug, for example. The mobile robot has a plurality of first electrical lines, preferably first power lines and/or first data lines, connecting the first electrical coupling elements of the robot base coupler to the tool. These first electrical lines may be guided through the robot arm coupler to the tool, for example. The tool is electrically connected to the robot base coupler, in particular to the first electrical coupling elements of the robot base coupler. Each one of the plurality of first electrical coupling elements may be connected to exactly one first electric line. A number of first electrical lines may be equal to a number of first electrical coupling elements.

The first power lines may be configured to transmit electrical power from the first electrical coupling elements to the tool. For example, the mobile robot may comprise three first power lines for three phases of AC electrical power and optionally an (additional) neutral first power line. The mobile robot may additionally or alternatively comprise two first power lines for DC current.

The first data lines may be configured for transmitting data, preferably analogue or digital signals, such as control signals, from respective first electrical coupling elements to the tool or vice versa. The first data lines may be configured to transmit signals to the tool or to transmit signals, such as measurement signals from sensors of the tool, from the tool to the first electrical coupling element.

The mobile robot furthermore comprises a plurality of second electrical lines, preferably second power lines and/or second data lines, connecting the second electrical coupling elements of the robot base coupler to the central module. The second power lines may be configured to transmit electrical power from the second electrical coupling elements to the central module or vice versa. Each one of the plurality of second electrical coupling elements may be connected to exactly one second electric line. A number of second electrical lines may be equal to a number of second electrical coupling elements. For example, the mobile robot may comprise three second power lines for three phases of AC current and optionally an additional neutral second power line. The mobile robot may additionally or alternatively comprise two second power lines for DC current.

The number of first electrical lines may be equal to the number of second electrical lines. For each first electrical line, there may be a corresponding second electrical line. For example, the three first power lines may correspond to the three second power lines respectively (i.e., with respect to the three single phases of the AC current), wherein the first neutral power line may correspond to the second neutral power line.

Therefore, the robot base coupler is electrically connected to both the tool and the central module. In other words, the tool support unit can be electrically connected to the central module via the second electrical coupling elements of the robot base coupler and the tool support unit can be electrically connected directly to the tool via the first electrical coupling elements.

The tool support adapter is configured to electrically connect at least one of the first electrical coupling elements to one of the second electrical coupling elements, such that at least one of the first electrical lines is electrically connected to at least one of the second electrical lines such that the tool support element is bypassed by the at least one first electrical line and the at least one second electrical line. By means of this bypass, a direct electrical connection between the central module and the tool is established. The first electrical lines and the second electrical lines are not permanently connected to each other, therefore there may not be a permanent or a non-detachable electrical connection between the central module and the tool. Depending on the tool and the tool support element, the central module and/or the tool support element may provide electrical power and/or control signals to the tool. In addition, the tool may comprise one or more sensors, which may be controlled by either the central module or the tool support element. Therefore, the configuration of (direct) connections between the central module, the tool support element and the tool depends on the individual tool and the individual tool support element and their interaction with another.

For example, the tool may comprise a gripper, which is to be controlled by the central module. The central module may transmit respective control signals via a second data line to the second electrical coupling element, which is connected to the first electrical coupling element by the tool support adapter. Consequently, the control signals are transmitted from the first electrical coupling elements via a first data line to the gripper. In summary, the central module transmits the control signals directly to the gripper, wherein the tool support element is bypassed with respect to these control signals. Depending on the application, various bypasses may be applicable, which can be configured by means of the tool support adapter. The configuration of these bypasses can be configured simply by connecting first electrical coupling elements and respective second electrical coupling elements to one another (this may be referred to as "bridging"). The robot base does not need to be opened, nor does any internal wiring of the mobile robot require adjustment when changing the tool and/or the tool support unit. The first electrical lines, the second electrical lines and the robot base coupler in combination with the (configurable) tool support adapter enable a simple and effective adaptation of the mobile robot to various applications with a low overall system complexity.

In an exemplary embodiment, the tool comprises a sensor, preferably a temperature sensor, wherein the sensor is connected to one of the first data lines, wherein the central module is connected to one of the second data lines, wherein the tool support adapter is configured to electrically connect a first electrical coupling element of the first data line to a second electrical coupling element of the second data line, such that the first data line is electrically connected to the second data line and the temperature sensor is connected to the central module, wherein the first data line and the second data line bypass the tool support element. For example, the sensor may comprise a camera or time-of-flight sensor element. Any data from the sensor may be required by the central module in order to control the mobile robot and specifically the tool. In this case, the data from the sensor is to be transmitted to the central module, wherein the tool support element may not require this data. Therefore, the first data line and the second data line are connected via the respective first electrical coupling element and second electrical coupling element of the respective lines in order to bypass the tool support element and establish a direct electrical connection between the tool (i.e., the sensor of the tool) and the central module. There may be more than one sensor, wherein more than one sensor may be directly connected to the central module by means of a separate bypass.

The tool support adapter may be configured to electrically connect the tool support element to at least one of the first electrical coupling elements such that the tool support element is connected to at least one of the first electrical lines, such that the tool support element is electrically connected to the tool. This leads to a direct electrical connection between the tool and the tool support element.

For example, the tool support element may comprise a secondary power supply for the tool, wherein the tool support adapter is configured to electrically connect the secondary power supply to the at least one first electrical coupling element. The secondary power supply may be an electric battery. The tool may, for example, require relatively high levels of electrical energy in comparison to an internal power supply of the robot base. In this case, the secondary power supply may be utilized to power the tool to extend an overall operating time of the mobile robot until recharging is necessary. The secondary power supply does not need to supply the central module with electrical energy and therefore, does not need to be connected to the central module by means of the tool support adapter.

For example, the tool support adapter may be configured to electrically connect the tool support element to at least one of the second electrical coupling elements, such that the tool support element is connected to at least one of the second electrical lines, such that the tool support element is electrically connected to the central module. This leads to a direct electrical connection between the tool support element and the central module.

Optionally, the central module may comprise a main power supply, preferably an electric battery, wherein the main power supply is connected to the at least one second electrical line. The tool support element may be supplied with electrical energy from the main power supply. Therefore, an electrical connection between the main power supply and the tool support element may be required. This (direct) connection is established by means of at least one second electrical line, the respective second electrical coupling element and the tool support adapter. The main power supply may comprise an electrical power inverter, for example.

In an exemplary embodiment, the tool support adapter is configured to electrically connect the tool support element to at least one of the first electrical coupling elements and at least one of the second electrical coupling elements, such that the at least one first electrical line and the tool support element and the at least one second electrical line are connected in series.

The tool support element comprises a variable-frequency drive, wherein the tool comprises an electric motor, wherein the electric motor is connected to the at least one first electrical line, wherein the tool support adapter is configured to electrically connect the variable-frequency drive to a first electrical coupling element of the at least one first electrical line and to a second electrical coupling element of the at least one second electrical line, such that the main power supply and the variable-frequency drive and the electric motor are connected in series. For example, the main power supply may be configured to supply electric AC current. The variable-frequency drive is supplied with AC current from the main power supply, and provides the electric motor of the tool with AC current with a variable frequency in order to control, for example, a speed and/or a torque of the electric motor. The variable-frequency drive is therefore connected in series in between the main power supply and the electric motor of the tool. The variable-frequency drive is an AC motor drive. Since not every possible tool requires a variable-frequency drive to be operated, the complexity of the robot base and in particular the central module can be reduced by including the variable-frequency drive in the tool support unit instead of including it in the central module, for example. The internal wiring configuration within the robot base does not need to be adjusted when the tool and the tool support unit are changed. It is sufficient that the tool support adapter provides the respective connections to the respective first electrical coupling elements and second electrical coupling elements of the robot base adapter to connect the tool support element accordingly and connections in between the first electrical coupling elements and the second electrical coupling elements to connect the central module directly to the tool. This solution renders the mobile robot particularly versatile, since a broad variety of tools and tool support units can be utilized in a simple, effective, and robust way.

The tool support element (e.g., the variable-frequency drive or a secondary power supply) may in principle be integrated in the tool. However, this would increase the weight of the tool and therefore also the mechanical stress on the multi-axis robot arm. In addition, the tool is subject to vibration and increased contamination, e.g. in case of drilling, which may harm sensitive (electronical) parts of the tool support element. Therefore, arranging the tool support element in the tool support unit (instead of in the tool), leads to reduced stress on the tool support element and the multi-axis robot arm.

Alternatively, or additionally to the variable-frequency drive, the tool support element may comprise a power inverter. For example, the main power supply may comprise an electric battery configured to supply DC current. An electric motor of the tool may require AC current, for example. Therefore, the power inverter may be supplied with DC current form the main power supply, may change the DC current to AC current and provide the electric motor of the tool with the AC current. The power inverter may be connected in series in between the main power supply and the electric motor of the tool.

Optionally, the electric motor is an asynchronous motor.

Optionally, the tool comprises a drill. The drill may be driven by the electric motor, in particular the asynchronous motor.

Optionally, the central module may be configured to identify the tool and/or the tool support unit. For example, the tool and/or the tool support unit may comprise an identifier, such as an identification chip, an RFID tag, or a CAN controller, for example. The central module may be configured to identify the tool and/or the tool support unit based on the identifier.

Optionally, the tool support unit may comprise a housing, wherein the tool support element is arranged within the housing. The tool support unit may be stationary, wherein the robot base is mobile. Preferably, the tool support unit may be releasable attached to the robot base and may move together with the robot base.

The tool support unit may comprise a storage, for example, for liquid material. The storage may be configured to store liquids, such as water or paint, for example. The tool may comprise a cleaning nozzle, for example, wherein the mobile robot may be configured to supply the cleaning nozzle with water from the storage of the tool support unit. For example, the tool may comprise a spraying nozzle for marking objects. The mobile robot may be configured to supply the spaying nozzle with paint form the storage. The tool may comprise a print head for 3D printing, in particular for 3D printing of concrete structures. The storage may be configured to store liquid concrete for 3D printing. For example, the mobile robot may comprise tubing, which connect the storage to the tool in order to transfer the stored fluid or liquid from the storage to the tool. For example, the tool support unit and/or the tool may comprise a pump for pumping the fluid. The storage may be configured to store a gas, such as compressed air, for example.

The mobile robot may comprise a further tool and/or a further tool support unit with a further tool support element. Accordingly, the robot base coupler may comprise a plurality of further electrical coupling elements. The mobile robot may comprise a plurality of further electrical lines, preferably further power lines and/or further data lines, connecting the further electrical coupling elements of the robot base coupler to the further tool or the further tool support unit. The tool support adapter may be configured to electrically connect at least one of the second electrical coupling elements to one of the further electrical coupling elements, such that at least one of the first electrical lines is electrically connected to at least one of the further electrical lines and the central module is electrically connected to the further tool or the further tool support unit. Regardless of a number of tools and/or tool support units, the internal wiring configuration within the robot base does not need to be adjusted when the tool and/or the tool support unit or a further tool or a further tool support unit are changed. It is sufficient that the tool support adapter provides the respective connections to the respective first electrical coupling elements, second electrical coupling elements and/or further electrical coupling elements of the robot base adapter.

By way of example, the disclosure is further explained with respect to some selected embodiments shown in the drawings for purposes of illustration. However, these embodiments shall not be considered limiting for the disclosure.
Fig. 1 schematically shows a mobile robot with a central module, a tool, and a tool support unit;
Fig. 2A schematically shows the central module, the tool as well as a robot base coupler of the mobile robot of fig. 1;
Fig. 2B schematically shows a tool support element of the tool support unit and a tool support adapter according to the embodiment of figures 1 and 2A;
Fig. 3 schematically shows another embodiment a mobile robot with a central module, a tool, and a tool support unit;
Fig. 4A schematically shows the central module, the tool as well as a robot base coupler of the mobile robot of fig. 3;
Fig. 4B schematically shows a tool support element of the tool support unit and a tool support adapter according to the embodiment of figures 3 and 4A;

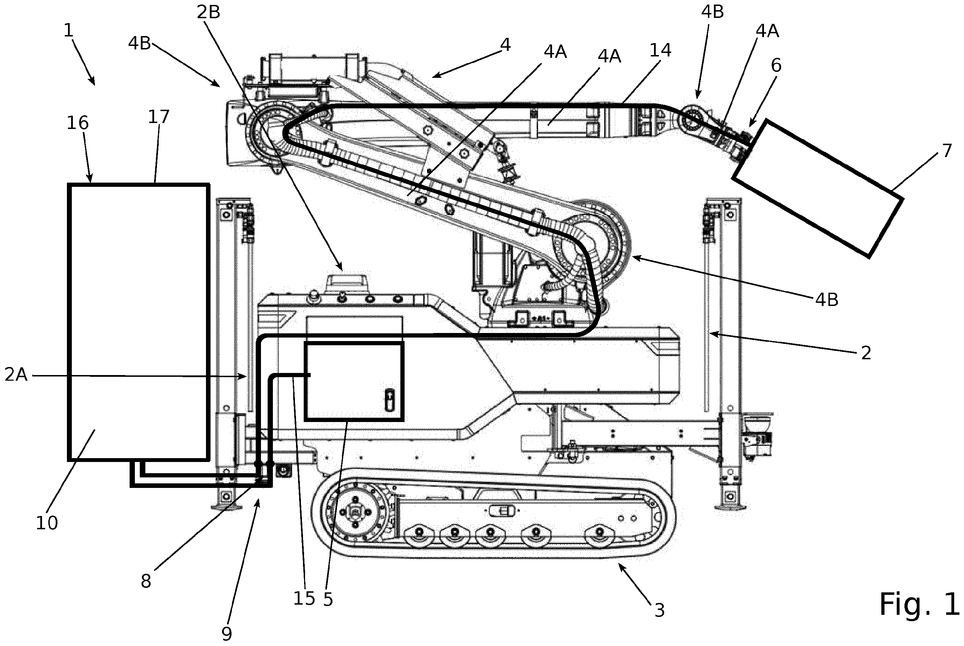

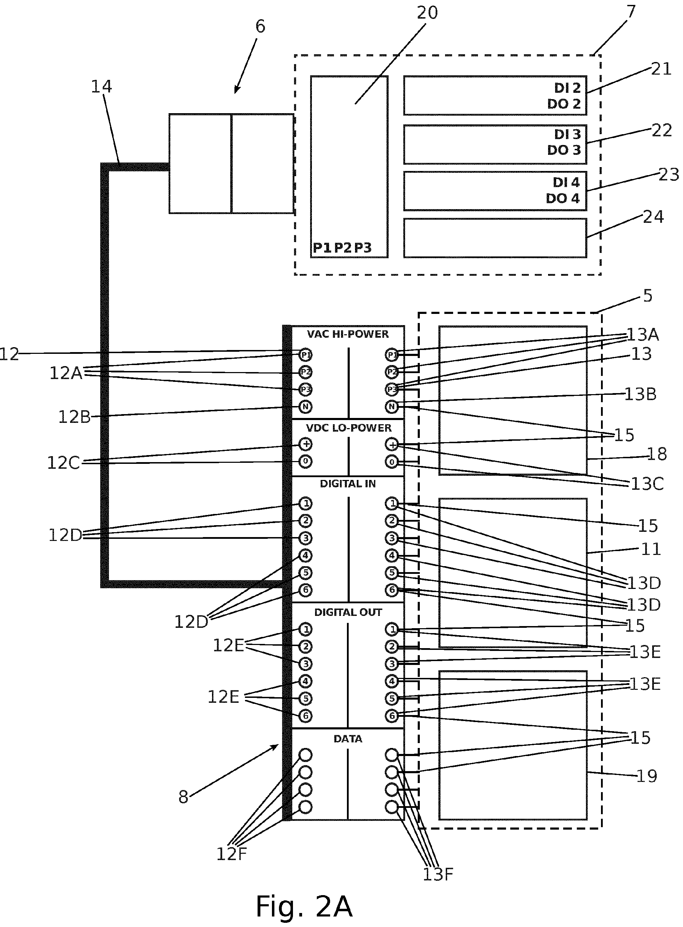

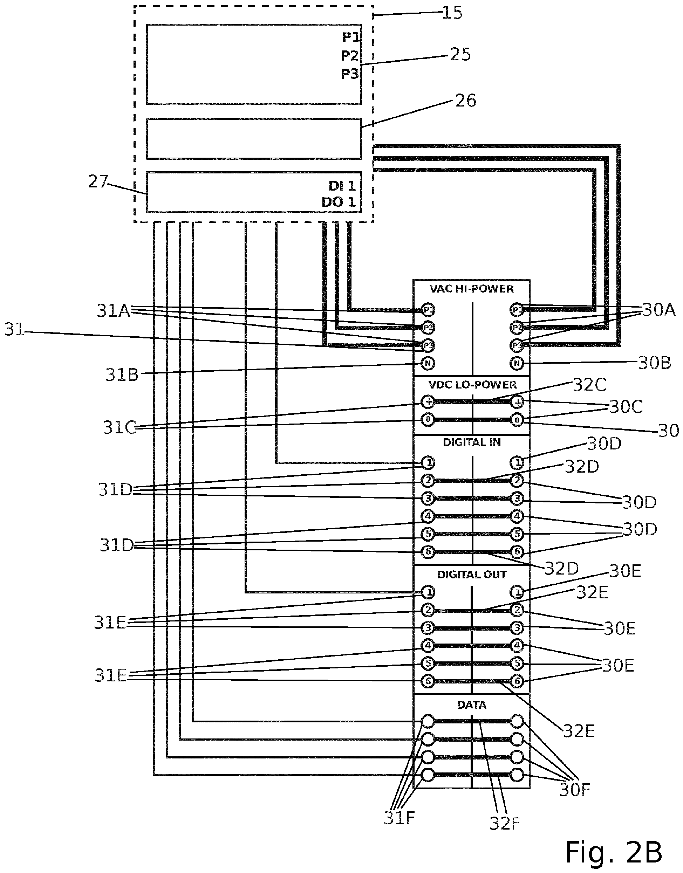

Fig. 1 shows a first embodiment of a mobile robot 1, in this example a mobile construction robot for a construction site, comprising:
- a robot base 2 with a propulsion system 3 for moving the robot base 2 on a surface, in this example on a surface of the construction site;
- a multi-axis robot arm 4 arranged on the robot base 2;
- a central module 5 with a controller 11 (see fig. 2, for example), wherein the controller is configured to control at least the propulsion system 3 and the multi-axis robot arm 4;
- a robot arm coupler 6 connected to the multi-axis robot arm 4;
- a tool 7 releasably connected to the robot arm coupler 6;
- a robot base coupler 8 (see fig. 2A for details) connected to the robot base 2;
- a tool support unit 10 with a tool support element 16 (see fig. 2), and a tool support adapter 9 (see fig. 2B for details), wherein the tool support adapter 9 of the tool support unit 10 is releasably connected to the robot base coupler 8.

The robot base coupler 8 comprises a plurality of first electrical coupling elements 12 (see fig. 2A), and a plurality of second electrical coupling elements 13 (see also fig. 2A). The mobile robot 1 furthermore comprises a plurality of first electrical lines 14 (note that only one first line 14 is indicated), preferably first power lines and/or first data lines, connecting the first electrical coupling elements 12 of the robot base coupler 8 to the tool 7. In addition, the mobile robot 2 comprises a plurality of second electrical lines 15 (note that only a single second electrical line 15 is indicated in fig. 1; details see fig. 2A), preferably second power lines and/or second data lines, connecting the second electrical coupling elements 12 of the robot base coupler 8 to the central module 5. As shown in fig. 2B. the tool support adapter 9 is configured to electrically connect at least one of the first electrical coupling elements 12 to one of the second electrical coupling elements 13, such that at least one of the first electrical lines 14 is electrically connected to at least one of the second electrical lines 15, such that the tool support element 16 is bypassed by the at least one first electrical line 14 and the at least one second electrical line 15.

The tool support unit 10 comprises a housing 17, which is attached to the robot base 2. The tool support unit is arranged on a rear side 2A of the robot base 2. The multi-axis robot-arm 4 is arranged on a top side 2B of the robot base 2. The multi-axis robot arm 4 comprises a plurality of links 4A connected by joints 4B.

Fig. 2A schematically shows the central module 5, the tool 7 as well as the configuration of the robot base coupler 8 according to the embodiment of fig. 1.

The central module 5 comprises a main power supply 18, the controller 11, and a further processing unit 19 (e.g., a computer). The main power supply 18 is configured to supply three-phase electric current and additionally to supply DC current.

The tool 7 comprises an electric motor 20, in this example a three-phase electric drill motor, for driving a drill of the tool 7. In addition, the tool 7 comprises a pneumatic lubricant valve 21 (for applying a lubricant to the drill), a motor readback unit 22, a temperature sensor 23 and a tool identifier 24(in this example a CAN controller).

As shown in fig. 2B, the tool support element 16 of fig. 1 comprises a variable-frequency drive 25 for driving the electric motor 20, a tool support identifier 26 (in this example a further CAN controller) and a variable-frequency driver readback unit 27.

The robot base coupler 8 comprises a total of twenty-two first electrical coupling elements 12 and twenty-two corresponding second electrical coupling elements 13. However, the number of first electrical coupling elements 12 and/or second electrical coupling elements 13 may also differ from twenty-two. For example, the number of first electrical coupling elements 12 may be thirty or more and the number of second electrical coupling elements 13 may be thirty or more. Three first electrical coupling elements 12A are connected to first power lines (which are examples of first electrical lines 14), which are configured to transmit three phases P1, P2 and P3 of an alternating (AC) current. These three first electrical coupling elements 12A are indicated by "P1", "P2" and "P2" respectively. A further first electrical coupling element 12B is connected to another first power line 23, which is configured as a neutral (N) first power line 14 (indicated by "N").

Furthermore, the robot base coupler 8 comprises two further first electrical coupling elements 12C. The first electrical coupling elements 12C are connected to further first power lines, which are configured to transmit direct (DC) current (indicated by "+" and "0" respectively).

Further first electrical coupling elements 12D, 12E and 12F are connected to first data lines (which are also examples of first electrical lines 14). The first data lines are configured to transmit digital or analogue data and/or control signals. In comparison to the first power lines, an electrical power transmitted through the first data lines is negligible. The first data lines may comprise a greater resistance per unit length than the first power lines, for example.

In detail, the robot base coupler 8 comprises six first electrical coupling elements 12D connected to first data lines, configured to transmit "digital in" signals (numbered "1" to "6"). The first electrical coupling elements 12D may be referred to as first digital in pins. Furthermore, the robot base coupler 8 comprises six first electrical coupling elements 12E connected to first data lines configured to transmit "digital out" signals. The first electrical coupling elements 12E may be referred to as first digital out pins. In addition, the robot base coupler 8 comprises four first electrical coupling elements 12F connected to first data lines, which are configured to transmit digital and/or analogue signals.

Correspondingly, three second electrical coupling elements 13A are connected to second power lines (which are examples of second electrical lines 15), which are configured to transmit three phases P1, P2 and P3 of an alternating (AC) current. A further second electrical coupling element 13B is connected to another second power line, which is configured as a neutral (N) second power line.

Furthermore, the robot base coupler 8 comprises two further second electrical coupling elements 13C. The second electrical coupling elements 13C are connected to further second power lines, which are configured to transmit direct (DC) current.

Further second electrical coupling elements 13D, 13E and 13F are connected to second data lines (which are also examples of second electrical lines 14). The second data lines are configured to transmit digital or analogue data and/or control signals. In comparison to the second power lines, an electrical power transmitted through the second data lines is negligible. The second data lines may comprise a greater resistance per unit length than the second power lines, for example.

In detail, the robot base coupler 8 comprises six second electrical coupling elements 13D connected to second data lines, configured to transmit "digital in" signals. The second electrical coupling elements 13D may be referred to as second digital in pins. Furthermore, the robot base coupler 8 comprises six second electrical coupling elements 13E connected to second data lines configured to transmit "digital out" signals. The second electrical coupling elements 13E may be referred to as second digital out pins. In addition, the robot base coupler 8 comprises four second electrical coupling elements 13F connected to second data lines, which are configured to transmit digital and/or analogue signals.

The first electrical coupling elements 12A, 12B, 12C, 12D, 12E and 12F correspond to the second electrical coupling elements 13A, 13B, 13C, 13D, 13E, and 13F respectively. For example, the first electrical coupling element 12A and the respective first power line for phase P1 of an AC current, corresponds to the second electrical coupling element 13A and the respective second power line for phase P1 of an AC current.

The first electrical lines 14 are not permanently connected to the second electrical lines 15. However, a connection between a first electrical line 14 and a (respective) second electrical lines 15 can be effected by connecting a first electrical coupling element 12 to the respective second electrical coupling element 13. This way, the central module 5 can be electrically connected to the tool 7.

The tool support adapter 9 comprises for each of the first electrical coupling elements 12 a first counter element 30 and for each of the second electrical coupling elements 13 a second counter element 31. If, for example the first electrical coupling elements 12 are (male) pins, the corresponding first counter elements 30 may be (female) jacks. Alternatively, the first electrical coupling elements 12, and the first counter elements 30 may be hermaphrodite electrical connectors. The same applies to the second electrical coupling elements 13 and the second counter elements 31 mutatis mutandis.

Note that the tool support adapter 9 and the robot base coupler 8 are schematically shown in a top view. Therefore, the first counter elements 30 are located on the right side of the tool support adapter 9, wherein the corresponding first electrical coupling elements 12 are located on the left side of the robot base coupler 8.

The tool support adapter 9 is configured to electrically connect at least one of the first electrical coupling elements 12 to one of the second electrical coupling elements 13, such that at least one of the first electrical lines 14 is electrically connected to at least one of the second electrical lines 15, such that the tool support element 16 is bypassed by the at least one first electrical line 14 and the at least one second electrical line 15. The number and configuration of these bypasses is dependent on the individual tool 7, the individual tool support element 16 and is defined by the tool support adapter 9 (i.e., by a configuration of the tool support adapter 9) .

For example, in this exemplary embodiment the tool support adapter 9 is configured to electrically connect the first electrical coupling elements 12C ("+" and "0", regarding DC current) to the respective second electrical coupling elements 13C ("+" and "0"). This is effected by an electrical connection 32B between corresponding counter elements 30C and 31C. This way, the main power supply 18 is directly connected to the tool 7 via the respective first power lines for the DC current, the first electrical coupling elements 12B, the respective first and second counter elements 30C and 31C, the electrical connections 32C, the second electrical coupling elements 13B and the respective second power lines. The tool support element 16 is bypassed in this regard, such that the main power supply 18 supplies DC current directly to the tool 7. The tool support element 16 is not supplied with DC current from the main power supply 18, since the tool support element 16 is not connected to the main power supply 18. The respective first counter elements 30C are not connected to the tool support element 16 in this case.

Similar to bridging of the first counter elements 30C and the second counter elements 31C (which leads to a bridging of the first electrical coupling element 12A with a respective second electrical coupling element 13A), the tool support adapter 9 is furthermore configured to electrically connect the first electrical coupling elements 12D (except for the one indicated with "1"), 12E, 12F to the respective second electrical coupling elements 13D (except for the one indicated with "1"), 13E and 13F via electrical connections 32D, 32E and 32F between the respective first counter elements 30D,30E, 30F and second counter elements 31D,31E, 31F.

For example, the tool 7 comprises the temperature sensor 23, wherein the temperature sensor 23 is connected to two of the first data lines, wherein the central module 5 is connected to two (respective) second data lines. The tool support adapter 9 is configured to electrically connect a first electrical coupling element 12D (indicated by "1") of the first data line to a second electrical coupling element 13D (indicated by "1") of the second data line, such that the first data line is electrically connected to the second data line and the temperature sensor 23 is connected to the central module 5, wherein the first data line and the second data line bypass the tool support element 16. Therefore, the central module 5 is directly connected to the temperature sensor 23 via two data lines as indicated by "DI 4" (digital in 4) and "DO 4" (digital out 4). The respective first counter element 30D (regarding digital in data line "4") and the respective second counter element 31D are bridged by means of an electrical connection 32D. The tool support element 16 is not connected to these lines. Similar to temperature sensor 23, the pneumatic lubricant valve 21 is connected to the central module 5 via "DI 1" (digital in 1) and "DO 1" (digital out 1). The motor readback unit 22 is connected to the central module 5 via two data lines "DI 3" and "DO 3".

The tool support adapter 9 is furthermore configured to electrically connect the tool support element 16 to at least one of the second electrical coupling elements 13, such that the tool support element 16 is connected to at least one of the second electrical lines 15, such that the tool support element 16 is electrically connected to the central module 5.

In this exemplary embodiment, the three first electrical coupling elements 12A related to the three phases of AC current P1, P2 and P2 are connected to the tool support element 16 by means of the tool support adapter 9 and the respective counter elements 30A. The central module 5 comprises the main power supply 18, wherein the main power supply 18 is connected to one of the second electrical lines 15. Therefore, the variable frequency drive 25 is supplied with AC current from the main power supply 18.

The tool support adapter 9 is furthermore configured to electrically connect the tool support element 16 to at least one of the second electrical coupling elements 13, such that the tool support element 16 is connected to at least one of the second electrical lines 15, such that the tool support element 16 is electrically connected to the central module 5.

In this exemplary embodiment, the three second electrical coupling elements 13A related to the three phases of AC current P1, P2 and P2 are connected to the tool support element 16 by means of the tool support adapter 9 and the respective counter elements 31A. Therefore, the tool support element 16 can supply three phases of AC current to the tool 7.

The tool support adapter 9 is configured to electrically connect the tool support element 16 to at least one of the first electrical coupling elements 12 and at least one of the second electrical coupling elements 13, such that the at least one first electrical line 14 and the tool support element 16 and the at least one second electrical line 15 are connected in series.

The tool support element 16 comprises the variable-frequency drive 25, wherein the tool 7 comprises the electric motor 20, wherein the electric motor 20 is connected to at least one first electrical line 14. The tool support adapter 9 is configured to electrically connect the variable-frequency drive 25 to a first electrical coupling element 12A of the first electrical line 14 (connected to the electric motor 20) and to a second electrical coupling element 13A of the second electrical line 15 (connected to the main power supply 18), such that the main power supply 18 and the variable-frequency drive 25 and the electric motor 20 are connected in series. The main power supply 18 of the central module 5 supplies the variable-frequency drive 25 with three phases of AC current (P1, P2 and P3). The variable-frequency drive 25 is supplied with AC current form the main power supply 25, and provides the electric motor 20 of the tool 7 with AC current with a variable frequency in order to control a speed and/or a torque of the electric motor 20. The variable-frequency drive 25 of the tool support element 16 is therefore connected in series in between the main power supply 25 and the electric motor 20 of the tool 7. The variable-frequency drive 25 is an AC motor drive.

The neutral phase N is not utilized in this exemplary embodiment.

The electric motor 20 is an asynchronous motor in this exemplary embodiment.

The tool 7 comprises a drill (not indicated). The drill is driven by the electric motor 20.

The first electrical coupling elements 12F and the second electrical coupling elements 13F (regarding first data lines and second data lines for transmitting data) are bridged by means of electrical connections 32F of the tool support adapter 9. In addition, the tool support element 16 is also connected to the respective data lines. This configuration enables a communication between each of the tool 7, the central module 5 and the tool support element 16.

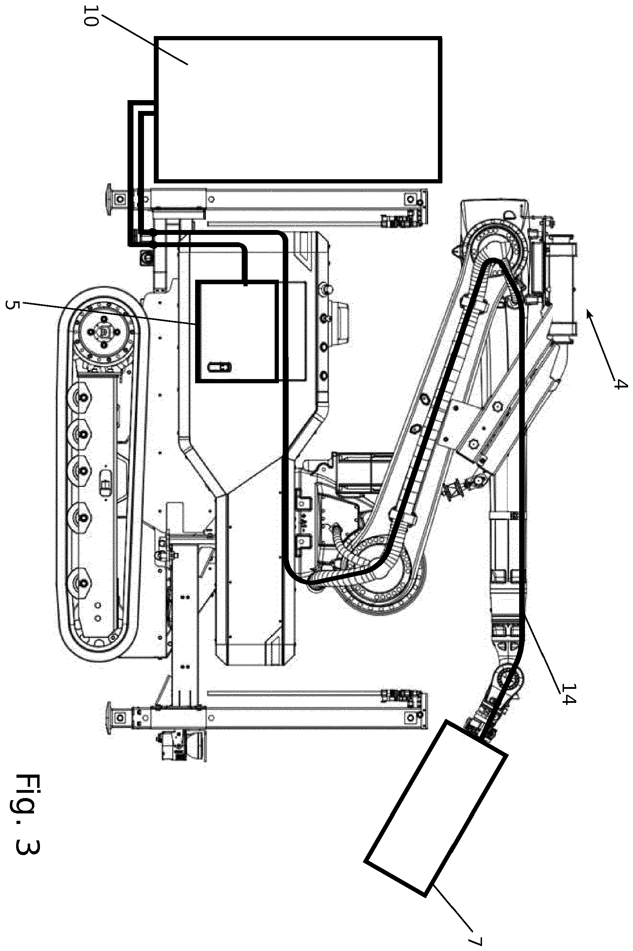

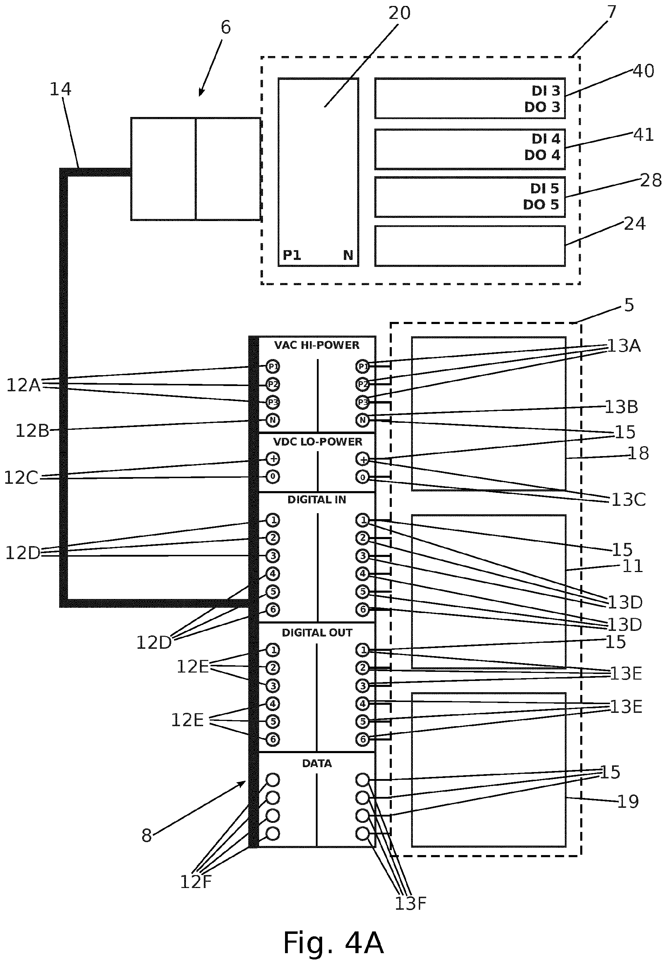

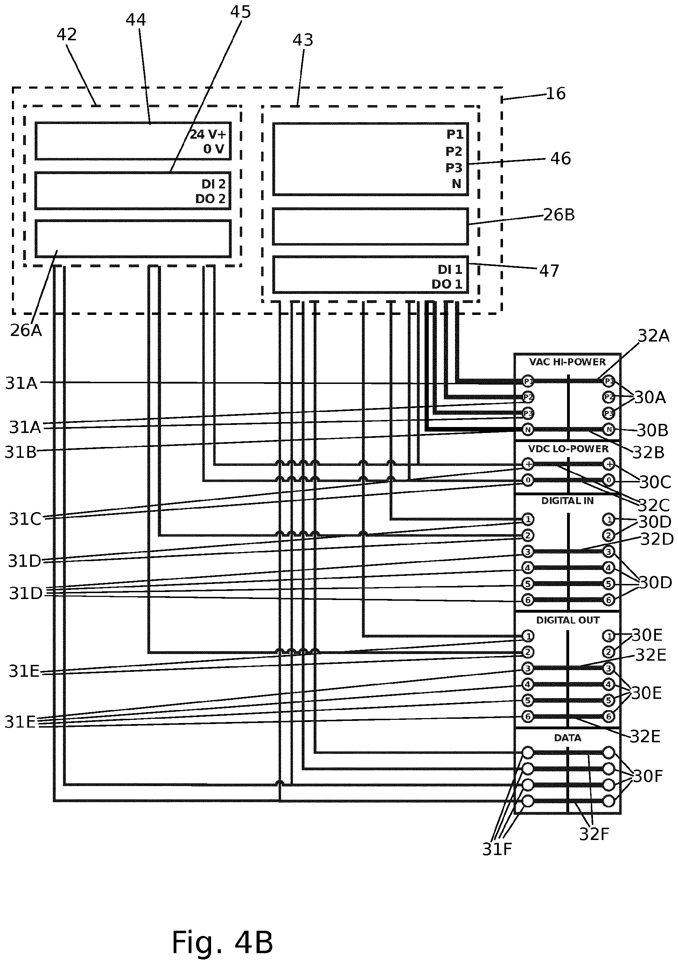

Fig. 3 shows a second embodiment of the mobile robot 1 with a central module 5, a tool 7 and a tool support unit 10. In this exemplary embodiment, the mobile robot 1 is configured for drilling and extracting dust that emerges from the drilling. Details on the tool 7 and the tool support unit 10 as well as the tool support adapter 9 are shown in figures 4A and 4B respectively.

Fig. 4A schematically shows the tool 7, which comprises another electric motor 20, a hole cleaning unit 40 for extracting dust from a drilling hole, a hole marker unit 41 for marking drilling holes, as well as a dust sleeve 28 for protecting an environment from dust. In addition, the tool 7 comprises a tool identifier 24, in this example a CAN controller.

The robot base coupler 8 is configured identical to the configuration shown in fig. 2A. However, the tool support adapter 9 is configured differently in this case in order to account for the different tool 7, different tool support unit 10 and application of this embodiment. Note that the configuration of the tool support adapter 9 is crucial for establishing electrical connections between the central module 5, the tool support unit 10 and the tool 7.

Fig. 4B shows the tool support element 16 of the tool support unit 10 of fig. 3. The tool support element 16 comprises a drill bit changer unit 42 as well as a dust extracting unit 43.

The drill bit changer unit 42 is configured to allow the (drilling) tool 7 to utilize different drill bit diameters and types. For example, the drill bit changer unit 42 may store both concrete drilling bits and rebar cutting bits, which the tool 7 may be equipped with. The drill bit changer unit 42 comprises a motor 44, which is in this example a 24 V DC motor, a position readout unit 45a and a first tool support identifier 26A (in this example a CAN controller).

The dust extracting unit 43 comprises a dust extractor motor 46, a second tool support identifier 26B as well as a motor readback unit 47. Furthermore, the dust extractor unit 43 comprises a vacuum unit (not indicated) which is driven by the dust extractor motor. The vacuum unit is connected to the tool 7 by means of a separate vacuum line (not shown). The dust extractor unit 43 enables the tool 7 to extract dust which is generated during drilling. The extracted dust may be stored by the tool support unit 10, for example.

In contrast to the configuration of the tool support adapter 9 shown in fig. 2B, the configuration is different in this embodiment to account for the different application and involved elements.

The tool support adapter 9 is configured to electrically connect at least one of the first electrical coupling elements 12 to one of the second electrical coupling elements 13, such that at least one of the first electrical lines 14 is electrically connected to at least one of the second electrical lines 15, such that the tool support element 16 is bypassed by the at least one first electrical line 14 and the at least one second electrical line 15.

In this exemplary embodiment, the electric motor 20 of the tool 7 is supplied with one phase (P1) of AC current by the central module 5. Accordingly, the tool support adapter is configured to bridge the respective first electrical coupling element 12A (regarding "P1") to the respective second electrical coupling element 13A by means of a first counter element 30A, a second counter element 31B and an electrical connection 32A. In addition, the electric motor 20 is connected to the further first electrical coupling element 12B, which is connected to a neutral ("N") first power line.

Similarly, the central module 5 is directly connected to the hole cleaning unit 40 via two data lines as indicated by "DI 3" (digital in 3) and "DO 3" (digital out 3). The respective first counter element 30D (regarding digital in data line "3") and the respective second counter element 31D are bridged by means of an electrical connection 32D. The tool support element 16 is not connected to these lines. The hole marker unit 41 is accordingly connected by means of DI 4 and DO 4, wherein the dust sleeve 28 is connected to the central module by means of DI 5 and DO 6 accordingly.

The tool 7 is furthermore supplied with DC current. Therefore, the respective first counter elements 30C and second counter elements 31C are bridged accordingly.

Furthermore, the tool support adapter 9 is configured to electrically connect the tool support element 16 to at least one of the second electrical coupling elements 13, such that the tool support element 16 is connected to at least one of the second electrical lines 15, such that the tool support element 16 is electrically connected to the central module 5. In this exemplary embodiment, the motor 44 of the drill bitchanger unit 42 is supplied with DC current, in this example 24 V DC current, from the main power supply 18. Therefore, the second counter elements 31C are connected to the drill bit changer unit 42 of the tool support element 16 accordingly. Note that DC current is supplied form the central module 5 directly to both the tool 7 and the tool support element 16 in this exemplary embodiment.

Furthermore, the position readout unit is connected to the central module 5 by means of DI 2 and DO 2. The second counter elements 31D and 31E concerning digital in 2 and digital out 2 respectively, are connected to the drill bit changer unit 42 accordingly.

The dust extractor motor 46 is connected to supplied with three phases of AC current (P1, P2 and P3) and is also connected to the neutral second power line "N". The second counter elements 31A and 31B are connected to the dust extractor unit 43 of the tool support element 16 accordingly. Note that one phase of the AC current (P1) is supplied directly to both the tool 7 and the tool support element 16 in this exemplary embodiment. Accordingly, also a neutral ("N") connection is established both directly both from the central module 5 to the tool 7 and from the central module 5 to the tool support element.

In general, the central module 5 can be connected directly to the tool support element 16 and connected directly to the tool 7. For example, regarding the phase "P1" the respective first electrical coupling element 12A is bridged to the respective second electrical coupling element 13A by means of the first counter element 30A, the second counter element 31B and the electrical connection 32A. In addition, the tool support element 16 is also connected to the second counter element 31B and therefore to the second electrical coupling element 13B, such that the tool support element 16 is connected to the second respective second electrical line 15 regarding "P1". Therefore, the phase "P1" is supplied from the central module 5 (in particular the main power supply 18) to both the tool 7 and the tool support element 16. Bridging and connecting the tool support element 16 are therefore not mutually exclusive. The same applies mutatis mutandis also to other connections than "P1".

The first electrical coupling elements 12F and the second electrical coupling elements 13F (regarding first data lines and second data lines for transmitting data) are bridged by means of electrical connections 32F of the tool support adapter 9. In addition, the tool support element 16 is also connected to the respective data lines. This configuration enables a communication between each of the tool 7, the central module 5 and the tool support element 16.

## Claims

1. Mobile robot (1), preferably a mobile construction robot for a construction site, comprising:
- a robot base (2) with a propulsion system (3) for moving the robot base on a surface;
- a multi-axis robot arm (4) arranged on the robot base (2);
- a central module (5) with a controller, wherein the controller is configured to control at least the propulsion system (3) and the multi-axis robot arm (4);
- a robot arm coupler (6) connected to the multi-axis robot arm (4);
- a tool (7) releasably connected to the robot arm coupler (6) ;
- a robot base coupler (8) connected to the robot base (2);
- a tool support unit (10) with a tool support element (16), for example an inverter or a variable-frequency drive (25), and a tool support adapter (9);
- wherein the tool support adapter (9) of the tool support unit (10) is releasably connected to the robot base coupler (8);
- wherein the robot base coupler (8) comprises a plurality of first electrical coupling elements (12, 12A, 12B, 12C, 12D, 12E, 12F), preferably first pins, and a plurality of second electrical coupling elements (13, 13A, 13B, 13C, 13D, 13E, 13F), preferably second pins;
**characterized by**:
- a plurality of first electrical lines (14), preferably first power lines and/or first data lines, connecting the first electrical coupling elements (12, 12A, 12B, 12C, 12D, 12E, 12F) of the robot base coupler (8) to the tool (7);
- a plurality of second electrical lines (15), preferably second power lines and/or second data lines, connecting the second electrical coupling elements (13, 13A, 13B, 13C, 13D, 13E, 13F) of the robot base coupler (8) to the central module (5) ;
wherein the tool support adapter (9) is configured to electrically connect at least one of the first electrical coupling elements (12, 12A, 12B, 12C, 12D, 12E, 12F) to one of the second electrical coupling elements (13, 13A, 13B, 13C, 13D, 13E, 13F), such that at least one of the first electrical lines (14) is electrically connected to at least one of the second electrical lines (15) and the tool support element (16) is bypassed by the at least one first electrical line (14) and the at least one second electrical line (15).

2. Mobile robot (1) according to claim 1, **characterized in that** the tool comprises a sensor, preferably a temperature sensor (23), wherein the sensor is connected to one of the first data lines, wherein the central module (5) is connected to one of the second data lines, wherein the tool support adapter (9) is configured to electrically connect a first electrical coupling element (12, 12A, 12B, 12C, 12D, 12E, 12F) of the first data line to a second electrical coupling element (13, 13A, 13B, 13C, 13D, 13E, 13F) of the second data line, such that the first data line is electrically connected to the second data line and the sensor is connected to the central module (5), wherein the first data line and the second data line bypass the tool support element (16).

3. Mobile robot (1) according to claim 1 or 2, **characterized in that** the tool support adapter (9) is configured to electrically connect the tool support element (15) to at least one of the first electrical coupling elements (12, 12A, 12B, 12C, 12D, 12E, 12F) such that the tool support element (16) is connected to at least one of the first electrical lines (14) and the tool support element (16) is electrically connected to the tool (7).

4. Mobile robot (1) according to claim 3, **characterized in that** the tool support element (17) comprises a secondary power supply for the tool (7), wherein the tool support adapter (9) is configured to electrically connect the secondary power supply to the at least one first electrical coupling element (12, 12A, 12B, 12C, 12D, 12E, 12F).

5. Mobile robot (1) according to anyone of the previous claims, **characterized in that** the tool support adapter (9) is configured to electrically connect the tool support element (16) to at least one of the second electrical coupling elements (13, 13A, 13B, 13C, 13D, 13E, 13F), such that the tool support element (16) is connected to at least one of the second electrical lines (15) and the tool support element (16) is electrically connected to the central module (5).

6. Mobile robot (1) according to claim 5, **characterized in that** the central module (5) comprises a main power supply (18), preferably an electric battery, wherein the main power supply is connected to the at least one second electrical line (15).

7. Mobile robot (1) according to claim 5 or 6, **characterized in that** the tool support adapter (9) is configured to electrically connect the tool support element (16) to at least one of the first electrical coupling elements (12, 12A, 12B, 12C, 12D, 12E, 12F) and at least one of the second electrical coupling elements (13, 13A, 13B, 13C, 13D, 13E, 13F), such that the at least one first electrical line and the tool support element and the at least one second electrical line are connected in series.

8. Mobile robot (1) according to claims 6 and 7, **characterized in that** the tool support element (16) comprises a variable-frequency drive (25), wherein the tool (7) comprises an electric motor (20), wherein the electric motor (20) is connected to the at least one first electrical line (14), wherein the tool support adapter (9) is configured to electrically connect the variable-frequency drive (25) to a first electrical coupling element (12, 12A, 12B, 12C, 12D, 12E, 12F) of the at least one first electrical line (14)and to a second electrical coupling element (13, 13A, 13B, 13C, 13D, 13E, 13F) of the at least one second electrical line (15), such that the main power supply (18) and the variable-frequency drive (25) and the electric motor (20) are connected in series.

9. Mobile robot (1) according to claim 8, **characterized in that** the electric motor (20) is an asynchronous motor.

10. Mobile robot (1) according to anyone of the previous claims, **characterized in that** the tool (7) comprises a drill.
